# EUROPEAN PATENT SPECIFICATION

(11) **EP 1 906 687 B1**
(45) Date of publication and mention of the grant of the patent: **20.11.2013**
(21) Application number: 07018598.8
(22) Date of filing: 21.09.2007
(51) Int. Cl.: H04N 5/44, H04N 21/414

(54) **Method and apparatus for processing digital mobile broadcast-related data in mobile communication terminal using universal subscriber identity module**
Verfahren und Vorrichtung zur Verarbeitung von mit einem digitalen mobilen Rundfunk zusammenhängenden Daten in einem mobilen Kommunikationsendgerät unter Verwendung eines universellen Teilnehmeridentitätsmoduls
Procédé et appareil de traitement de données associées à la diffusion mobile numérique dans un terminal de communication mobile utilisant un module d'identification universel de l'abonné

(30) Priority: 29.09.2006 KR 20060096216
(43) Date of publication of application: 02.04.2008
(73) Proprietor: Samsung Electronics Co., Ltd., Suwon-si, Gyeonggi-do, 443-742 (KR)
(72) Inventor: Kim, Kang Wook, Suwon-si, Gyeonggi-do (KR)
(74) Representative: Nederlandsch Octrooibureau

(56) References cited:
- WO-A-2005/041567
- US-A1- 2005 090 235
- US-A1- 2005 176 465
- US-A1- 2006 010 472
- US-A1- 2006 080 709
- A. CONSTANTINOU: "High Capacity SIMs"[Online] March 2006 (2006-03), pages 1-30, XP002468648 Retrieved from the Internet: URL:http://visionmobile.com/rsc/whitepaper s/> [retrieved on 2008-02-12]

## Description

### 1. Field of the Invention

The present invention relates to a mobile communication terminal with a Universal Subscriber Identity Module (USIM), which receives digital mobile broadcasts. More particularly, this invention relates to a method and apparatus that store digital mobile broadcast-related data, such as an Electronic Program Guide (EPG), a favourite channel list, etc., in a USIM, and update the stored data, such that the digital mobile broadcast-related data can be used by a mobile communication terminal, and even by a mobile communication terminal that has newly replaced another mobile communication terminal.

### 2. Description of the Related Art

Today, demands related to digital mobile broadcasting, such as Digital Multimedia Broadcasting (DMB), Digital Video Broadcasting (DVB), Media Forward Link Only (MediaFLO), etc., are remarkably increasing. Such digital mobile broadcasting is a new type of broadcast service, which is different from analog broadcasting. The digital mobile broadcasting technology is created as mobile communication technology and broadcasting are mixed. In recent years, the digital mobile broadcast can be received through a common mobile communication terminal, such as a portable terminal, other than a dedicated terminal for receiving digital mobile broadcasts.

The mobile communication terminal receives a variety of added data as well as broadcast programs in a digital mobile broadcast receive mode. The added data includes an Electronic Program Guide (EPG) or an Electronic Service Guide (ESG), which is referred to as electronic broadcast information. Also, the added data includes a variety of information, such as news, traffic, weather, living, stock, and home-shopping information, electronic commercial transaction information, etc. However, since the conventional mobile communication terminal has stored this data in its memory, if a user purchases a new mobile communication terminal, the user cannot use the data (electronic broadcast information) stored in the old mobile communication terminal.

Also, while viewing a digital mobile broadcast, the user often saves the channel in a favourite channel list. However, since the favourite channel list is also stored in the memory of the mobile communication terminal, if the user replaces the old mobile communication terminal, he/she cannot utilize this list.

Furthermore, the conventional mobile communication terminal may often install a Universal Subscriber Identity Module (USIM) therein. The USIM, also called a Subscriber Identity Module (SIM) or a Universal Identity Module (UIM), is in the shape of a card. The USIM is a type of Integrated Circuit (IC) chip that stores personal information to provide a variety of services, such as, subscriber authorization, global roaming, billing, security, etc. If the USIM is implemented with a type of card, the USIM can be freely coupled to and separated from one terminal to another terminal.

### SUMMARY OF THE INVENTION

The present invention is made to solve the above problems, and therefore, the present invention provides a method and apparatus that store digital mobile broadcast-related data, such as electronic broadcast information, a favourite channel list, etc., in a Universal Subscriber Identity Module (USIM) installed in a mobile communication terminal that can receive the digital mobile broadcast, such that the digital mobile broadcast-related data stored in the USIM can be used in a new mobile communication terminal.

The present invention further provides a method and apparatus that automatically update digital mobile broadcast-related data, such as electronic broadcast information, etc., stored in a USIM installed in a mobile communication terminal that can receive the digital mobile broadcast.

In accordance with an exemplary embodiment of the present invention, a method for processing digital mobile broadcast-related data of digital mobile broadcasting in a mobile communication terminal using a Universal Subscriber Identity Module (USIM) comprising; determining whether a setting menu for the digital mobile broadcast-related data is executed; determining whether specific digital mobile broadcast-related data is set through the setting menu; and determining whether a USIM is installed in the mobile communication terminal; storing the extracted digital mobile broadcast-related data in the USIM, if USIM is installed in the mobile communication terminal, storing the selected specific digital mobile broadcast-related data in a storage unit in the mobile communication terminal if USIM is not installed in the mobile communication terminal, wherein the digital mobile broadcast-related data comprises favourite channel list selected through the setting menu by users. The digital mobile broadcast-related data includes electronic broadcast information. If the digital mobile broadcast-related data has already been stored in the USIM, the storing further comprises updating the digital mobile broadcast-related data.

If the USIM is determined to be installed in the mobile communication terminal, the storing is performed. The digital mobile broadcast-related data includes favourite channels.

US 2005/0090235 A1 discloses a method and system for providing a user of a terminal with broadcast services, wherein the terminal controller is configured to use data from Electronic Service Guide (ESG) for extracting information concerning the accessibility of services, which is then used to generate a list of selectable services available to the user. This list is presented at the user interface in a selectable manner, wherein the subscribed services are presented to the user differently than non-subscribed services.

"High Capacity SIMs" White Paper by A. Constantinou, March 2006 (2006-3) discusses a high capacity SIM cards and gives an analysis of high capacity SIM cards concerning their functionalities and advantages. D2, further, predicts several potential applications of the high capacity SIM cards. For example, High Capacity SIM cards can store personal information such as music, pictures and videos, as well as application settings in such a way that it can be ported across mobile terminals. Both documents do not disclose a) determining whether specific digital mobile broadcast-related data is set through the setting menu, wherein the digital mobile broadcast-related data comprises favourite channel list selected through the setting menu by users; b) determining whether a USIM is installed in the mobile communication terminal; c) storing the selected specific digital mobile broadcast-related data in the USIM ifUSIM is installed in the mobile communication terminal; d) storing the selected specific digital mobile broadcast-related data in a story unit in the mobile communication terminal if USIM is not installed in the mobile communication terminal.

In accordance with a further exemplary embodiment of the present invention, a method for processing digital mobile broadcast-related data of digital mobile broadcasting in a mobile communication terminal using a Universal Subscriber Identity Module (USIM) includes if the mobile communication terminal has booted, determining whether the digital mobile broadcast-related data is stored in the USIM; extracting a data creation date and time from the digital mobile broadcast-related data stored in the USIM; determining whether a time has elapsed from the data creation date and time; receiving broadcast data of the digital mobile broadcasting; extracting the digital mobile broadcast-related data from the received broadcast data; and storing the extracted digital mobile broadcast-related data in the USIM to update the USIM.

The digital mobile broadcast-related data includes electronic broadcast information.

In accordance with another exemplary embodiment of the present invention, an apparatus for processing digital mobile broadcast-related data of digital mobile broadcasting in a mobile communication terminal using a Universal Subscriber Identity Module (USIM) comprises a USIM detector for checking whether the USIM is installed in the mobile communication terminal; a broadcast receiver for receiving broadcast data of the digital mobile broadcasting; a data processing unit for extracting the digital mobile broadcast-related data from the received broadcast data; and a controller for storing the extracted digital mobile broadcast-related data in the USIM,
herein the controller determines whether a setting menu for the digital mobile broadcast-related data is executed,
checks whether specific digital mobile broadcast-related data is set through the setting menu, and stores the selected specific digital mobile broadcast-related data in the USIM, if USIM is determined to be installed in the mobile communication terminal; and
stores the selected specific digital mobile broadcast-related data in a storage unit in the mobile communication terminal if USIM
is not installed in the mobile communication terminal,
wherein the digital mobile broadcast-related data comprises favourite channel list selected through the setting menu by users.
In a further embodiment of the apparatus the digital mobile broadcastrelated data comprises electronic broadcast information.

### BRIEF DESCRIPTION OF THE DRAWINGS

The objects, features, and advantages of the present invention will be more apparent from the following detailed description in conjunction with the accompanying drawings, in which:
- FIG. 1: is a view illustrating that a USIM card is exchangeable between mobile communication terminals;
- FIG. 2: is a schematic block diagram illustrating a mobile communication terminal according to an embodiment of the present invention;
- FIG. 3: is a flow chart illustrating a method for processing digital mobile broad-cast-related data according to an embodiment of the present invention;
- FIG. 4: is a view depicting a display screen where electronic broadcast information of the digital mobile broadcast-related data is displayed;
- FIG. 5: is a flow chart illustrating a method for processing digital mobile broad-cast-related data according to another embodiment of the present invention; and
- FIG. 6: is a flow chart illustrating a method for processing digital mobile broad-cast-related data according to still another embodiment of the present invention.

### DETAILED DESCRIPTION OF EXEMPLARY EMBODIMENTS

Hereinafter, exemplary embodiments of the present invention are described in detail with reference to the accompanying drawings. The same reference numbers are used throughout the drawings to refer to the same or like parts. Detailed descriptions of well-known functions and structures incorporated herein may be omitted to avoid obscuring the subject matter of the present invention.

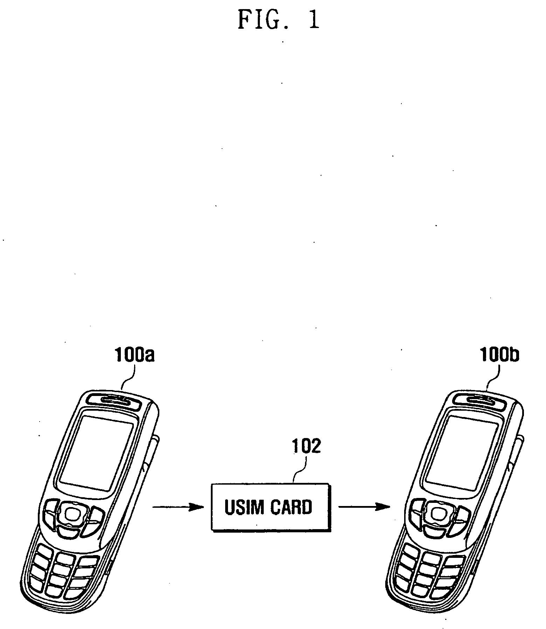

FIG. 1 is a view illustrating that a USIM is exchangeable between mobile communication terminals.

Referring to FIG. 1, the USIM 102 can be installed to and removed from the mobile communication terminals 100a and 100b according to the present invention. The USIM 102 stores personal information to provide services, such as subscriber authorization, etc., and digital mobile broadcast-related data, such as electronic broadcast information, a favorite channel list, etc. If the USIM 102 is implemented with a USIM card, the USIM card 102 is installed to a mobile communication terminal 100a for use and then removed from the mobile communication terminal 100a to be reinstalled to another mobile communication terminal 100b. In this case, the data previously used in the mobile communication terminal 100a can be used in the mobile communication terminal 100b.

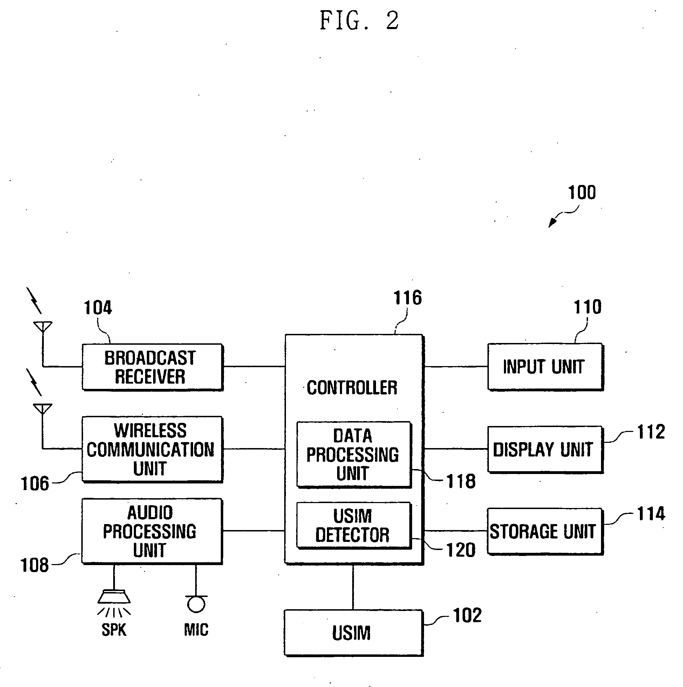

FIG. 2 is a schematic block diagram illustrating a mobile communication terminal according to an embodiment of the present invention.

As shown in FIG. 2, the mobile communication terminal 100 has a USIM 102 and receives digital mobile broadcasts. The mobile communication terminal 100 includes a broadcast receiver 104, a wireless communication unit 106, an audio processing unit 108, an input unit 110, a display unit 112, a storage unit 114, and a controller 116. The controller 116 includes a data processing unit 118 and a USIM detector 120. The mobile communication terminal 100 may further include a plurality of elements that provide added functions, such as a camera function, a music playback function, a short-range wireless communication function, etc., according to various user demands.

The USIM 102 is preferably implemented by a card, and installed into the mobile communication terminal 100. The USIM 102 stores digital mobile broadcast-related data, such as electronic broadcast information, a favorite channel list, etc. The electronic broadcast information, which is also referred to as an Electronic Program Guide (EPG) or an Electronic Service Guide (ESG), includes broadcast programs, broadcast channels, start and end times of broadcast programs, etc., which are provided by broadcasting stations. The favorite channel list includes broadcast channels set by a viewer. The digital mobile broadcast-related data includes news, weather, traffic, stock information, and home-shopping information, electronic commercial transactions, etc.

The broadcast receiver 104 serves to receive digital mobile broadcasts. The digital mobile broadcasting can provide services based on DMB, DVB, or media-FLO. The broadcast receiver 104 includes a tuner that tunes to a frequency of a physical channel to selectively receive broadcast signals there through and a demodulator that demodulates the broadcast signals received through the physical channel to a Transport Stream (TS). The broadcast receiver 104 outputs the demodulated transport stream to the controller 116, where the transport stream is a Motion Picture Experts Group 2 Transport Stream (MPEG2 TS).

The wireless communication unit 106 serves to transmit and receive voice signals and messages to and from other wireless communication units, respectively, thereby allowing their terminals to communicate. The wireless communication unit 106 includes an RF transmitter for up-converting the frequency of transmitted signals and amplifying the transmitted signals and an RF receiver for low-noise amplifying received RF signals and down-converting the frequency of the received RF signals i.e., the wireless communication unit 106 converts a modulation signal from the controller 116 to an Intermediate Frequency (IF) signal and then converts the IF signal to an RF signal. Next, the RF signal is transmitted to a base station through an antenna. Also, the wireless communication unit 106 receives an RF signal from the base station through the antenna and then converts the RF signal to an IF signal and a baseband signal, in that order, to transmit the signals to the controller 116.

The audio processing unit 108 plays an audio signal output from the controller 116 back or transmits an audio signal, such as a voice signal, inputted though a microphone to the controller 116 i.e., the audio processing unit 108 converts an analog voice signal received through the microphone into a digital signal called Pulse Code Modulation (PCM), and transmits the digital signal to the controller 116. Further, the audio processing unit 108 converts a digital signal of a caller's voice from the controller 116 into an audible analog signal to output it to the speaker.

The input unit 110 outputs an input signal generated by a user to the controller 116. For example, when a user executes a favourite channel setting menu and selects a specific favourite channel, the input unit 110 detects the user's input and generates a corresponding input signal. The input unit 110 may be implemented with a pointing device, such as a touch pad, as well as with a common keypad.

The display unit 112 displays a variety of information on its screen according to the control of the controller 116. For example, the display unit 112 displays a broadcast program that the broadcast receiver 104 receives according to a user's channel selection, electronic broadcast information, or a favourite channel setting menu. The display unit 112 is generally implemented with a Liquid Crystal Display (LCD) but may be implemented with other display devices. If the display unit 112 is implemented with a touch screen, the display unit 112 can also serve to perform a part of or all of input functions, instead of the input unit 110.

The storage unit 114 stores a variety of programs and data that are executed or processed under the control of the controller 116. For example, the storage unit 114 stores an Operating System (OS) for booting the mobile communication terminal 100, and application programs for a variety of functions of the terminal 100. Also, the storage unit 114 stores data for the application programs and data generated during the execution of the application programs.

The controller 116 controls the entire operation of the mobile communication terminal 100. Specifically, the controller 116 controls the signal flows between the broadcast receiver 104, the wireless communication unit 106, the audio processing unit 108, the input unit 110, the display unit 112, and the storage unit 114.

The data processing unit 118 of the controller 116 extracts electronic broadcast information from the broadcast data received through the broadcast receiver 104 or extracts creation dates and times from the electronic broadcast information. The USIM detector 120 of the controller 116 detects whether the USIM 102 is installed into the mobile communication terminal 100.

The following is a description of a method for processing digital mobile broadcast-related data, according to the present invention. Although the following will describe an embodiment of the present invention in a case where the digital mobile broadcast-related data is an EPG, it should be understood that other digital mobile broadcast-related data could be applied in like manner.

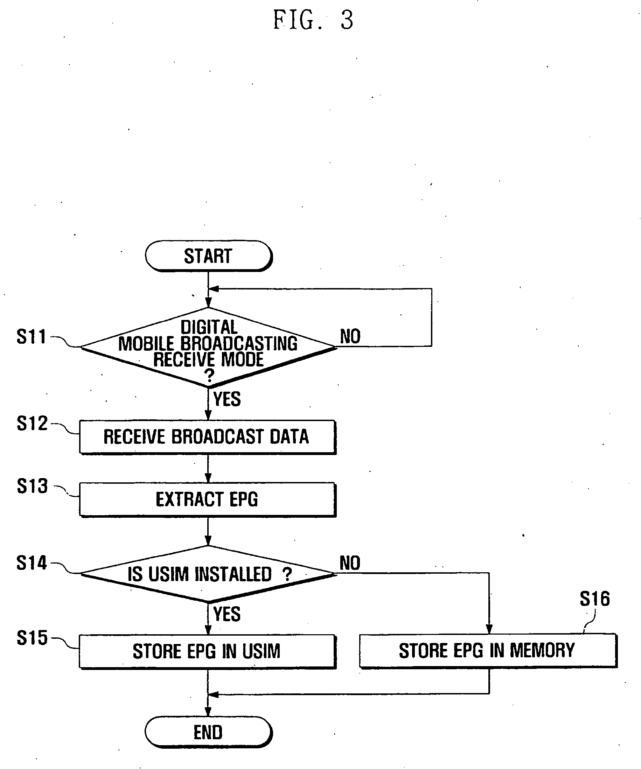

FIG. 3 is a flow chart illustrating a method for processing digital mobile broadcast-related data according to an embodiment of the present invention.

Referring to FIGS. 2 and 3, the controller 116 determines whether the mobile communication terminal 100 is currently in a digital broadcast reception mode, in step S 11. If the current mode is in a digital broadcast reception mode, the broadcast receiver 104 receives broadcast data and transmits it to the controller 116, in step S12. The data processing unit 118 of the controller 116 extracts an EPG from the received broadcast data, in step S 13.

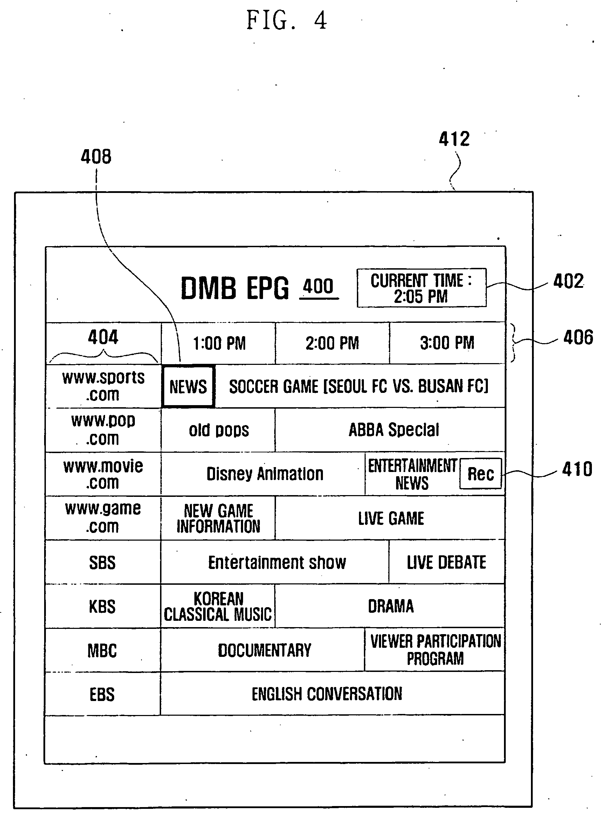

An example of the extracted EPG is shown in FIG. 4. The EPG 400 used for DMB is displayed on the display screen 412. The display screen 412 displays the current time 402 at the upper right, and broadcast channels 404 and broadcast times 406, which are aligned along the left vertical axis and the upper horizontal axis, respectively. Each broadcast channel (for example, www.sports.com) is composed of broadcast programs whose names (for example, news 408) are displayed according to the broadcast times. If a certain broadcast program is selected through a key input or a touch, a record button "Rec" 410 appears at the side of a corresponding broadcast program name. If the record button 410 is enabled, it can record a current broadcast program or a reserved broadcast program when the reserved recording time arrives.

Returning to FIGS. 2 and 3, the USIM detector 120 of the controller 116 determines whether the USIM 102 is installed to the mobile communication terminal 100, in step S 14. If the USIM 102 is installed, the controller 116 stores the EPG extracted by the data processing unit 118 in the USIM 102, in step S 15. However, if the USIM 102 is not installed, the controller 116 stores the EPG in the storage unit 114, in step S16.

As described above, the present invention can store the digital mobile broadcast-related data, such as an EPG, in the USIM or the storage unit, depending on whether the USIM is installed to the mobile communication terminal. If the digital mobile broadcast-related data is stored in the USIM, it can be used in another mobile communication terminal because the USIM storing the digital mobile broadcast-related data can be shifted from one mobile communication terminal to another. Further, concerning the digital mobile broadcast-related data, a user's setting data, such as a favourite channel list, can be stored in the USIM, which will be described below.

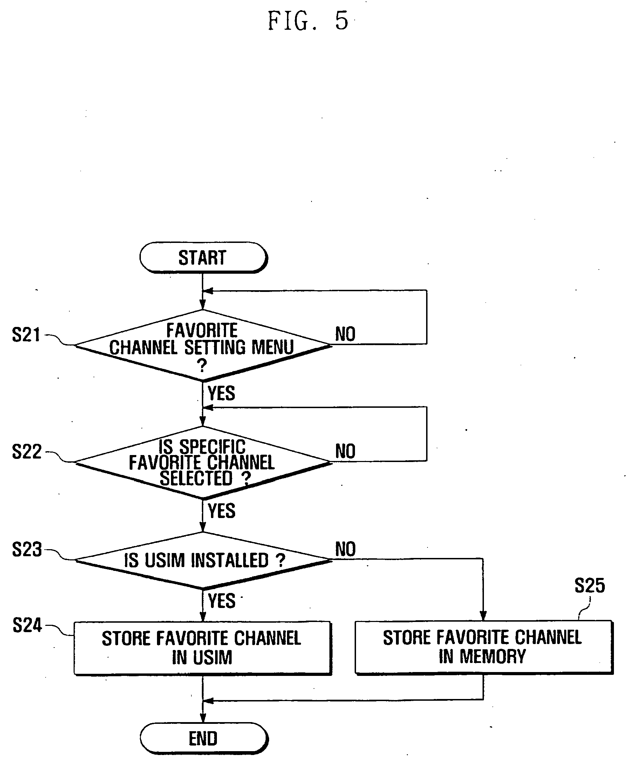

FIG. 5 is a flow chart illustrating a method for processing digital mobile broadcast-related data according to another embodiment of the present invention.

Referring to FIGS. 2 and 5, the controller 116 determines whether a favourite channel setting menu is executed in step S21. The favourite channel setting menu is stored in the storage unit 114 and executed when a user inputs selections through the input unit 110. Preferably, the favourite channel setting menu may be set in a digital mobile broadcast receive mode, but may be set in another mode as well.

Next, the controller 116 determines whether a certain favourite channel is selected from the favourite channel setting menu, in step S22. Here, selecting a favourite channel means that one or more of broadcast channels is selected or a storage command is inputted. The channel selection and storage command input are performed using different input keys of the input unit.

Next, the USIM detector 120 of the controller 116 determines whether the USIM 102 is installed to the mobile communication terminal 100, in step S23. If the USIM 102 is installed, the controller 116 stores the favourite channel list in the USIM 102, in step S24. On the contrary, if the USIM 102 is not installed, the controller 116 stores the favourite channel list in the storage unit 114, in step S25.

As described above, the present invention can store the digital mobile broadcast-related data, such as a favourite channel list, in the USIM or the storage unit, depending on whether the USIM is installed to the mobile communication terminal. If the digital mobile broadcast-related data is stored in the USIM, the digital mobile broadcast-related data can be used in another mobile communication terminal because the USIM storing the digital mobile broadcast-related data can be shifted from one mobile communication terminal to another.

Although the two embodiments described above are implemented in such a way that the digital mobile broadcast-related data is stored in the USIM or the storage unit depending on whether the USIM is installed to the mobile communication terminal, it should be understood that the present invention should not be restricted by the embodiments. For example, there may be a modification where the digital mobile broadcast-related data may be stored in both the USIM and the storage unit without a determination as to whether the USIM is installed.

The following is a description of a method for updating the digital mobile broadcast-related data stored in the USIM. Although the following will describe an embodiment of the present invention in the case that the digital mobile broadcast-related data is an EPG, it should be understood that other digital mobile broadcast-related data could be applied in the same manner.

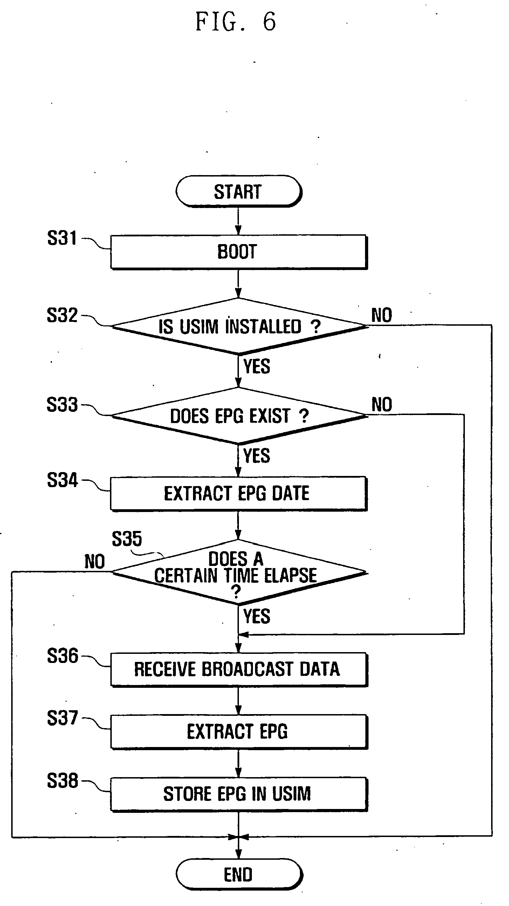

FIG. 6 is a flow chart illustrating a method for processing digital mobile broadcast-related data according to still another embodiment of the present invention.

Referring to FIGS. 2 and 6, when the mobile communication terminal 100 has booted, in step S31, the USIM detector 120 of the controller 116 determines whether the USIM is installed into the terminal 100, in step S32. If the USIM 102 is installed, the controller 116 checks whether an EPG is stored in the USIM 102, in step S33. If the EPG is stored, the data processing unit 118 of the controller 116 extracts an EPG creation date and time from the EPG, in step S34.

The controller 116 compares the extracted EPG creation date and time with the current date and time and determines whether the extracted EPG creation date and time, in step S35, has arrived. If the extracted EPG creation date and time has arrived, the controller 116 controls the broadcast receiver 104 to receive broadcast data, in step S36.

Next, the data processing unit 118 extracts an EPG from the received broadcast data, in step S37. The extracted EPG is stored in the USIM 102 under the control of the controller 116, in step S38. In this stage, since the USIM 102 has already stored an EPG (which is called an existing EPG), the existing EPG is updated by the newly input EPG.

On the contrary, if the predetermined time has not elapsed the EPG creation date and time at step S35, the EPG update procedures, steps 36 to 38, are skipped. Also, if the EPG is not stored in the USIM 102 at step S33, the procedure proceeds with step S36 to store an EPG in the USIM 102.

Although the present invention has been described based on the EPG updating method where an EPG is updated when the mobile communication terminal has booted, it should be understood that the EPG updating method should not restrict the method for updating digital mobile broadcast-related data. For example, the embodiment of the present invention can be implemented in such a way that the digital mobile broadcast-related data can be updated when digital mobile broadcast is first received after the terminal has booted. The modification can be implemented using the data processing method, referring to FIG. 3. Therefore, such modification will not be described in this application.

Also, the EPG updating method of FIG. 6 need not necessarily display received broadcast data on the display unit, i.e., even when the mobile communication terminal is not in a digital mobile broadcast receive mode, the EPG updating method receives broadcast data, extracts an EPG from the received broadcast data, and updates an existing EPG in the USIM.

## Claims

1. A method for processing digital mobile broadcast-related data of digital mobile broadcasting in a mobile communication terminal (100) using a Universal Subscriber Identity Module USIM (102), comprising:
determining whether a setting menu for the digital mobile broadcast-related data is executed (S21);
determining whether specific digital mobile broadcast-related data is set through the setting menu (S22); and
determining whether a USIM is installed in the mobile communication terminal (S23);
storing the selected specific digital mobile broadcast-related data in the USIM if USIM is installed in the mobile communication terminal (S24);
storing the selected specific digital mobile broadcast-related data in a storage unit in the mobile communication terminal if USIM is not installed in the mobile communication terminal (S25),
'wherein the digital mobile broadcast-related data comprises favourite channel list selected through the setting menu by users.

2. The method of claim 1, comprising:
if the mobile communication terminal has booted, determining whether the digital mobile broadcast-related data is stored in the USIM (S33);
extracting a data creation date and time from the digital mobile broadcast-related data stored in the USIM (S34);
determining whether a time has elapsed from the data creation date and time (S35);
receiving broadcast data of the digital mobile broadcasting (S36);
extracting the digital mobile broadcast-related data from the received broadcast data (S37); and
storing the extracted digital mobile broadcast-related data in the USIM to update the USIM (S38).

3. The method of claim 1, wherein the digital mobile broadcastrelated data comprises electronic broadcast information.

4. An apparatus for processing digital mobile broadcast-related data of digital mobile broadcasting in a mobile communication terminal (100) using a Universal Subscriber Identity Module (USIM), comprising:
a USIM detector (120) for determining whether the USIM (102) is installed in the mobile communication terminal;
a broadcast receiver (104) for receiving broadcast data of the digital mobile broadcasting;
a data processing unit (118) for extracting the digital mobile broadcastrelated data from the received broadcast data; and
a controller (116) for storing the extracted digital mobile broadcastrelated
data in the USIM,
wherein the controller is adapted to determine whether a setting menu for the digital mobile broadcast-related data is executed, is adapted to check whether specific digital mobile broadcast-related data is set through the setting menu, and is adapted to store the selected specific digital mobile broadcast-related data in the USIM if USIM is determined to be installed in the mobile communication terminal; and is adapted to store the selected specific digital mobile broadcast-related data in a storage unit in the mobile communication terminal if USIM is not installed in the mobile communication terminal,
wherein the digital mobile broadcast-related data comprises favourite channel list selected through the setting menu by users.

5. The apparatus of claim 4, wherein the digital mobile broadcastrelated data comprises electronic broadcast information.

## Patentansprüche

1. Verfahren zum Verarbeiten digitaler mobilrundfunkbezogener Daten eines digitalen Mobilrundfunks in einem Mobilkommunikations-Endgerät (100) unter Verwendung eines Universal Subscriber Identity-Moduls (USIM) (102), wobei das Verfahren Folgendes umfasst:
Feststellen, ob ein Einstellmenü für die digitalen mobilrundfunkbezogenen Daten ausgeführt wird (S21);
Feststellen, ob spezielle digitale mobilfunkbezogene Rundsendedaten über das Einstellmenü eingestellt werden (S22); und
Feststellen, ob ein USIM in dem Mobilkommunikations-Endgerät installiert ist (S23);
Speichern der ausgewählten speziellen digitalen mobilrundfunkbezogenen Daten in dem USIM, wenn ein USIM in dem Mobilkommunikations-Endgerät installiert ist (S24);
Speichern der ausgewählten speziellen digitalen mobilrundfunkbezogenen Daten in einer Speichereinheit in dem Mobilkommunikations-Endgerät, wenn kein USIM in dem Mobilkommunikations-Endgerät installiert ist (S25),
wobei die digitalen mobilrundfunkbezogenen Daten eine Favoritenkanalliste umfassen, die über das Einstellmenü durch Nutzer ausgewählt wurde.

2. Verfahren nach Anspruch 1, das Folgendes umfasst:, wenn das Mobilkommunikations-Endgerät gebootet hat, Feststellen, ob die digitalen mobilrundfunkbezogenen Daten in dem USIM (S33) gespeichert sind;
Extrahieren von Datenerstellungsdatum und -uhrzeit aus den in dem USIM gespeicherten digitalen mobilrundfunkbezogenen Daten (S34);
Feststellen, anhand von Datenerstellungsdatum und -uhrzeit, ob eine Zeit verstrichen ist (S35);
Empfangen von Rundsendedaten des digitalen Mobilrundfunks (S36);
Extrahieren der digitalen mobilrundfunkbezogenen Daten aus den empfangenen Rundsendedaten (S37); und
Speichern der extrahierten digitalen mobilrundfunkbezogenen Daten in dem USIM, um das USIM zu aktualisieren (S38).

3. Verfahren nach Anspruch 1, wobei die digitalen mobilrundfunkbezogenen Daten elektronische Rundsendeinformationen umfassen.

4. Vorrichtung zum Verarbeiten digitaler mobilrundfunkbezogener Daten eines digitalen Mobilrundfunks in einem Mobilkommunikations-Endgerät (100) unter Verwendung eines Universal Subscriber Identity-Moduls (USIM), wobei die Vorrichtung Folgendes umfasst:
einen USIM-Detektor (120) zum Feststellen, ob das USIM (102) in dem Mobilkommunikations-Endgerät installiert ist;
einen Rundfunkempfänger (104) zum Empfangen von Rundsendedaten des digitalen Mobilrundfunks;
eine Datenverarbeitungseinheit (118) zum Extrahieren der digitalen mobilrundfunkbezogenen Daten aus den empfangenen Rundsendedaten; und
einen Controller (116) zum Speichern der extrahierten digitalen mobilrundfunkbezogenen Daten in dem USIM,
wobei der Controller dafür geeignet ist festzustellen, ob ein Einstellmenü für die digitalen mobilrundfunkbezogenen Daten ausgeführt wird; dafür geeignet ist zu überprüfen, ob spezielle digitale mobilfunkbezogene Rundsendedaten über das Einstellmenü eingestellt werden; und dafür geeignet ist, die ausgewählten speziellen digitalen mobilrundfunkbezogenen Daten in dem USIM zu speichern, wenn festgestellt wird, dass ein USIM in dem Mobilkommunikations-Endgerät installiert ist; und dafür geeignet ist, die ausgewählten speziellen digitalen mobilrundfunkbezogenen Daten in einer Speichereinheit in dem Mobilkommunikations-Endgerät zu speichern, wenn kein USIM in dem Mobilkommunikations-Endgerät installiert ist,
wobei die digitalen mobilrundfunkbezogenen Daten eine Favoritenkanalliste umfassen, die über das Einstellmenü durch Nutzer ausgewählt wurde.

5. Vorrichtung nach Anspruch 4, wobei die digitalen mobilrundfunkbezogenen Daten elektronische Rundsendeinformationen umfassen.

## Revendications

1. Procédé pour traiter des données liées à une diffusion mobile numérique de diffusion mobile numérique dans un terminal de communication mobile (100) en utilisant un module d'identité d'abonné universel, USIM, (102), comprenant :
la détermination si un menu de réglage pour les données liées à une diffusion mobile numérique est exécuté (S21) ;
la détermination si des données liées à une diffusion mobile numérique spécifiques sont réglées par l'intermédiaire du menu de réglage (S22) ; et
la détermination si un USIM est installé dans le terminal de communication mobile (S23) ;
la mémorisation des données liées à une diffusion mobile numérique spécifiques sélectionnées dans l'USIM si l'USIM est installé dans le terminal de communication mobile (S24) ;
la mémorisation des données liées à une diffusion mobile numérique spécifiques sélectionnées dans une unité de mémorisation dans le terminal de communication mobile si l'USIM n'est pas installé dans le terminal de communication mobile (S25),
dans lequel les données liées à une diffusion mobile numérique comprennent une liste de chaînes préférées sélectionnée par l'intermédiaire du menu de réglage par des utilisateurs.

2. Procédé selon la revendication 1, comprenant :
si le terminal de communication mobile a été amorcé, la détermination si les données liées à une diffusion mobile numérique sont mémorisées dans l'USIM (S33) ;
l'extraction d'une date et d'une heure de création de données à partir des données liées à une diffusion mobile numérique mémorisées dans l'USIM (S34) ;
la détermination si un temps s'est écoulé depuis la date et l'heure de création de données (S35) ;
la réception de données de diffusion de la diffusion mobile numérique (S36) ;
l'extraction des données liées à une diffusion mobile numérique à partir des données de diffusion reçues (S37) ; et
la mémorisation des données liées à une diffusion mobile numérique extraites dans l'USIM pour mettre à jour l'USIM (S38).

3. Procédé selon la revendication 1, dans lequel les données liées à une diffusion mobile numérique comprennent des informations de diffusion électronique.

4. Appareil pour traiter des données liées à une diffusion mobile numérique de diffusion mobile numérique dans un terminal de communication mobile (100) en utilisant un module d'identité d'abonné universel, USIM, comprenant :
un détecteur d'USIM (120) pour effectuer la détermination si l'USIM (102) est installé dans le terminal de communication mobile ;
un récepteur de diffusion (104) pour effectuer la réception de données de diffusion de la diffusion mobile numérique ;
une unité de traitement de données (118) pour effectuer l'extraction des données liées à une diffusion mobile numérique à partir des données de diffusion reçues ; et
un organe de commande (116) pour effectuer la mémorisation des données liées à une diffusion mobile numérique extraites dans l'USIM,
dans lequel l'organe de commande est apte à effectuer la détermination si un menu de réglage pour les données liées à une diffusion mobile numérique est exécuté ; la détermination si des données liées à une diffusion mobile numérique spécifiques sont réglées par l'intermédiaire du menu de réglage ; la mémorisation des données liées à une diffusion mobile numérique spécifiques sélectionnées dans l'USIM s'il est déterminé que l'USIM est installé dans le terminal de communication mobile ; la mémorisation des données liées à une diffusion mobile numérique spécifiques sélectionnées dans une unité de mémorisation dans le terminal de communication mobile si l'USIM n'est pas installé dans le terminal de communication mobile,
dans lequel les données liées à une diffusion mobile numérique comprennent une liste de chaînes préférées sélectionnée par l'intermédiaire du menu de réglage par des utilisateurs.

5. Appareil selon la revendication 4, dans lequel les données liées à une diffusion mobile numérique comprennent des informations de diffusion électronique.
